# EUROPEAN PATENT APPLICATION

(11) **EP 3 236 175 A1**
(43) Date of publication of application: **25.10.2017**
(21) Application number: 17166871.8
(22) Date of filing: 18.04.2017
(51) Int. Cl.: F24H 8/00, F24H 1/41, F24H 1/44, F28D 7/00, F28D 7/08, F28D 9/00

(54) **HEAT EXCHANGER**

(30) Priority: 18.04.2016 KR 20160046991
(71) Applicant: Daesung Celtic Enersys Co., Ltd., Chungcheongbuk-do (KR)
(72) Inventor: CHO, Sung Tae, Cheongju-si, Chungcheongbuk-do (KR); CHO, Chul Hee, Cheongju-si, Chungcheongbuk-do (KR)
(74) Representative: Gulde & Partner

(57) **Abstract**

Provided is a heat exchanger. The heat exchanger may include a plurality first through third heat exchange pipes connected between a first side part and a second side part, each of which comprising a path of moving heat-exchanger fluid inside; first blisters formed on the outer side surfaces of the first side part and the second side part, thereby connecting gaps between each neighboring first heat exchange pipe; second blisters formed on the outer side surface of the first side part, thereby connecting the first heat exchange pipes with the second heat exchange pipes or the second heat exchange pipes with the third second heat exchange pipes; and third blisters formed on the outer side surface of the second side part, thereby connecting neighboring second heat exchange pipes or neighboring third heat exchange pipes. The second heat exchange pipes may be spaced apart from the first heat exchange pipes and formed above the first heat exchange pipes and the third heat exchange pipes may be spaced apart from the second heat exchange pipes and formed above the second heat exchange pipes.

## Description

### CROSS-REFERENCE TO RELATED PATENT APPLICATION

This application claims the benefit of Korean Patent Application No. 10-2016-0046991, filed on April 18, 2016, in the Korean Intellectual Property Office, the disclosure of which is incorporated herein in its entirety by reference.

### BACKGROUND OF THE INVENTION

### 1. Field of the Invention

The present invention relates to a heat exchanger, and more particularly, to a heat exchanger which absorbs heat on a surface of the heat exchanger, thereby maximizing efficiency thereof.

### 2. Description of the Related Art

In a heat exchanger, a fluid and a heated fluid at each different temperature cross to accomplish heat transfer. The heat exchanger is widely used for heating, air-conditioning, power generation, cooling, and waste heat recovery in various air-conditioning and heating devices including boilers and air-conditioners.

For example, a boiler may be divided into a condensing type and a non-condensing type. The condensing type boiler includes a sensible heat exchanger and a latent heat exchanger, wherein the sensible heat exchanger uses heat burnt by a burner to directly heat heating water and the latent heat exchanger uses condensed latent heat of exhaust gas passed through the sensible heat exchanger to heat heating water. The non-condensing type boiler only includes a latent heat exchanger.

In the heat exchanger for only absorbing sensible heat, a function for handling a damp condition generated during condensing is not needed and thus, a heat exchanger made of a copper material showing high thermal conduction efficiency has been used. However, in the heat exchanger for absorbing both sensible heat and latent heat, condensing is accomplished inside the heat exchanger and thus, a latent heat absorber therein is in a damp condition. Such a damp condition is made since water vapor in combustion exhaust gas is condensed and is changed from gas to fluid. Such a hanged fluid is called condensate water. The condensate water is acidic fluid and corrodes metal having no corrosion resistance so that a boiler is not durable.

In addition, in the heat exchanger made of a copper material for only absorbing sensible heat, thermal conductivity is excellent but such corrosion is generated while in a condensed condition so that durability of the heat exchanger is lowered. Although the latent heat still remains in combustion gas which is passed through the latent heat exchanger, latent heat is directly released to the air through an exhaust air duct and thus, conventionally thermal efficiency is low.

### SUMMARY OF THE INVENTION

The present invention provides a blister-formed heat exchanger which absorbs heat on a surface thereof, thereby maximizing efficiency of the heat exchanger.

According to an aspect of the present invention, there is provided a heat exchanger including a plurality first through third heat exchange pipes connected between a first side part and a second side part, each of which comprising a path of moving heat-exchanger fluid inside, first blisters formed on the outer side surfaces of the first side part and the second side part, thereby connecting gaps between each neighboring first heat exchange pipe, second blisters formed on the outer side surface of the first side part, thereby connecting the first heat exchange pipes with the second heat exchange pipes or the second heat exchange pipes with the third second heat exchange pipes, and third blisters formed on the outer side surface of the second side part, thereby connecting neighboring second heat exchange pipes or neighboring third heat exchange pipes, wherein the second heat exchange pipes may be spaced apart from the first heat exchange pipes and formed above the first heat exchange pipes and the third heat exchange pipes may be spaced apart from the second heat exchange pipes and formed above the second heat exchange pipes.

The second heat exchange pipes may be each formed above the first heat exchange pipes disposed at both end sides from among the first heat exchange pipes and the third heat exchange pipes may be formed above the second heat exchange pipes.

The heat-exchanger fluid may be flowed to the first heat exchange pipe disposed on one side from among the first heat exchange pipes through an inlet connected to the first side part and the heat-exchanger fluid delivered to the third heat exchange pipe disposed on the other side from among the third heat exchange pipes may be discharged to an outlet connected to the first side part through a fourth blister.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of a heat exchanger according to an embodiment of the present invention;
FIG. 2 is a front view of a first side part of the heat exchanger of FIG. 1;
FIG. 3 is a front view of a second side part of the heat exchanger of FIG. 1;
FIG. 4 is a plan view of the heat exchanger of FIG. 1 viewing from the top; and
FIGS. 5 and 6 illustrate a moving path of a heat-exchanger fluid in the heat exchanger of FIG. 1.

### DETAILED DESCRIPTION OF THE INVENTION

The attached drawings for illustrating exemplary embodiments of the present invention are referred to in order to gain a sufficient understanding of the present invention, the merits thereof, and the objectives accomplished by the implementation of the present invention.

Hereinafter, the present invention will be described in detail by explaining exemplary embodiments of the invention with reference to the attached drawings. Like reference numerals in the drawings denote like elements.

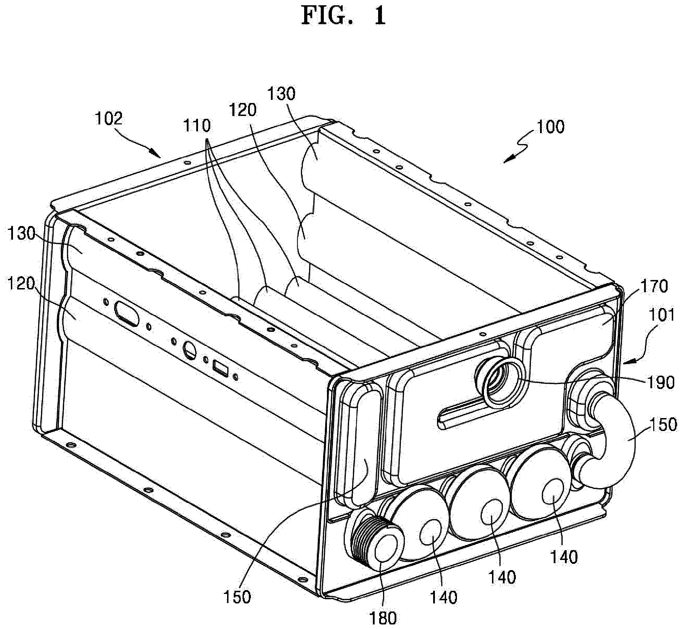

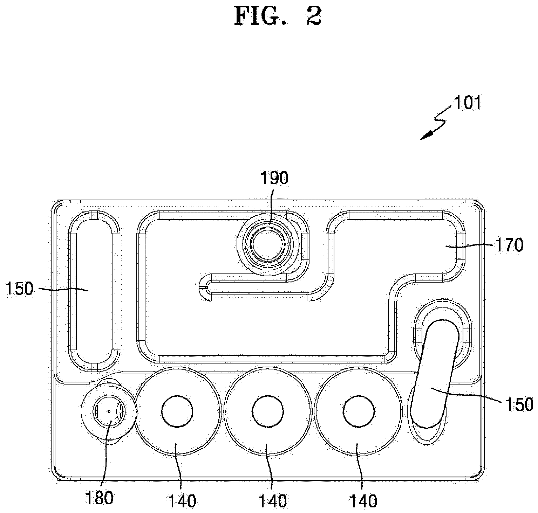

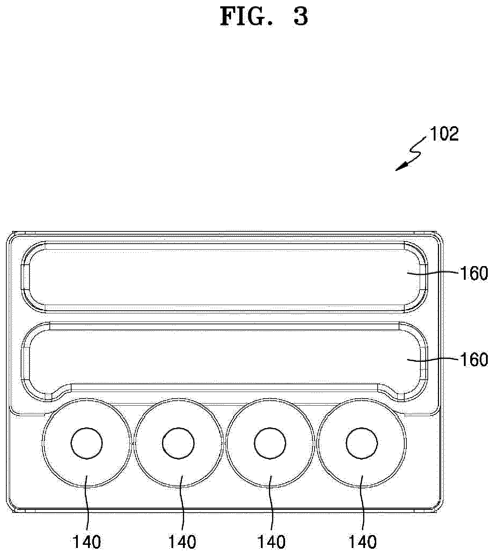

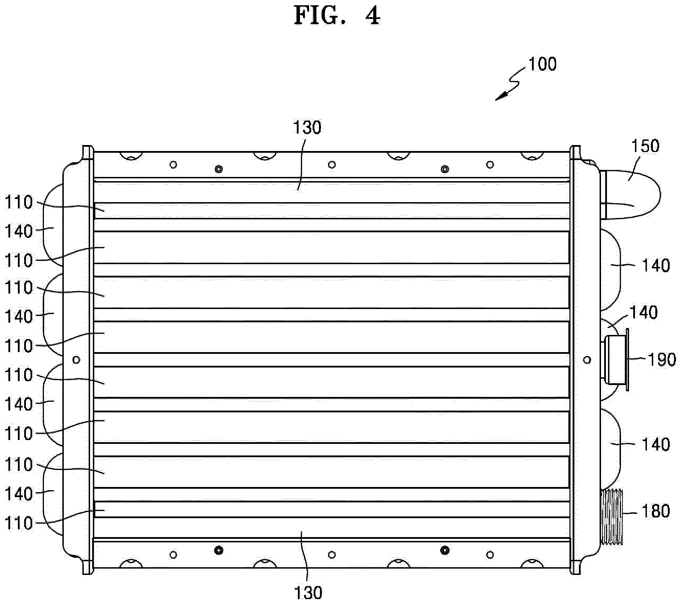

FIG. 1 is a perspective view of a heat exchanger 100 according to an embodiment of the present invention, FIG. 2 is a front view of a first side part 101 of the heat exchanger 100 of FIG. 1, FIG. 3 is a front view of a second side part 102 of the heat exchanger 100 of FIG. 1, and FIG. 4 is a plan view of the heat exchanger 100 of FIG. 1 viewing from the top.

Referring to FIGS. 1 through 4, the heat exchanger 100 may include a plurality of first heat exchange pipes 110, a plurality of second heat exchange pipes 120, a plurality of third heat exchange pipes 130, first blisters 149, second blisters 150, and third blisters 160.

The first heat exchange pipes 110, the second heat exchange pipes 120, and the third heat exchange pipes 130 are connected to each other between the first side part 101 and the second side part 102 and a path for moving a heat-exchanger fluid may be formed inside the heat exchanger 100. The heat-exchanger fluid is flowed in through an inlet 180 and is discharged to an outlet 190 through the first heat exchange pipes 110, the second heat exchange pipes 120, and the third heat exchange pipes 130, wherein the heat-exchanger fluid may be a fluid such as water. The first heat exchange pipes 110, the second heat exchange pipes 120, and the third heat exchange pipes 130 may be hollow pipes so that the heat-exchanger fluid may move the inside. Also, the first heat exchange pipes 110, the second heat exchange pipes 120, and the third heat exchange pipes 130 may be connected to each other by using first blisters 140, second blisters 150, and third blisters 160 so that the heat-exchanger fluid may be delivered from the inlet 180 to the outlet 190 through the first heat exchange pipes 110, the second heat exchange pipes 120, and the third heat exchange pipes 130. This will be described in more detail below with reference to the first blisters 140, the second blisters 150, and the third blisters 160.

The first heat exchange pipes 110 may be formed on the lower surface of the heat exchanger 100, the second heat exchange pipes 120 may be spaced apart from the first heat exchange pipes 110 and formed above the first heat exchange pipes 110, and the third heat exchange pipes 130 may be spaced apart from the second heat exchange pipes 120 and formed above the second heat exchange pipes 120. For example, as illustrated in FIGS. 1 through 4, eight first heat exchange pipes 110 may be formed on the lower surface of the heat exchanger 100, the second heat exchange pipes 120 may be each formed above the first heat exchange pipes 110 disposed at both end sides from among the first heat exchange pipes, and the third heat exchange pipes 130 may be each formed above the second heat exchange pipes 120. The first heat exchange pipes 110, the second heat exchange pipes 120, and the third heat exchange pipes 130 according to the embodiment of the present invention may not be formed as described above with reference to FIGS. 1 through 4 and various numbers of heat exchange pipes may be formed in various forms. However, since the heat exchange pipes are connected to each other through the first blisters 140, the second blisters 150, and the third blisters 160, which will be described below, the heat-exchanger fluid flowed through the inlet 180 needs to be discharged to the outlet 190.

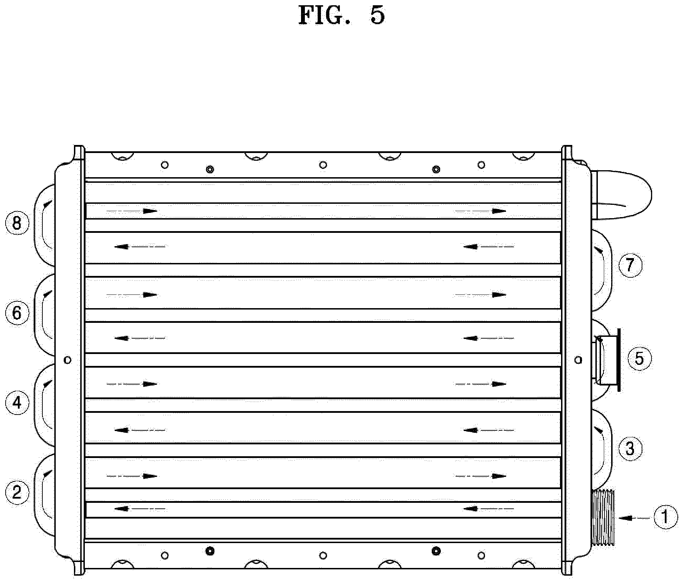

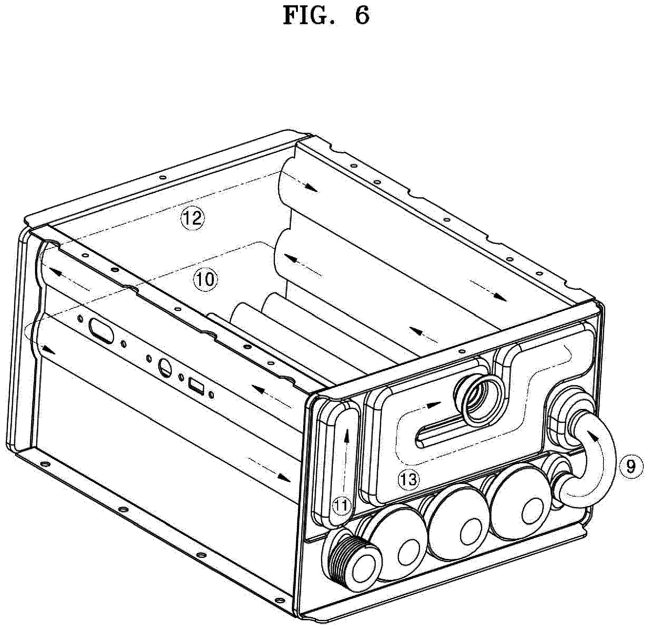

The first blisters 140 may be each formed on the outer side surfaces of the first side part 101 and the second side part 102 and may connect each neighboring first heat exchange pipe 110. That is, a path of moving the heat-exchanger fluid in the first heat exchange pipe 110 is connected to an inside space of the first blister 140 so that the heat-exchanger fluid may move to the neighboring first heat exchange pipe 110 through the first blister 140. The form of the first blisters 140 is not limited to that of in FIGS. 1 through 4 described above and may vary if the heat-exchanger fluid may move as described below with reference to FIGS. 5 and 6.

The second blisters 150 may be formed on the outer side surface of the first side part 101 and may each connect the first heat exchange pipe 110 with the second heat exchange pipe 120 or the second heat exchange pipe 120 with the third second heat exchange pipe 130. That is, when the heat-exchanger fluid delivered after passing through all of the first heat exchange pipes 110 is discharged through the last first heat exchange pipe 110, the heat-exchanger fluid may be delivered to the second heat exchange pipe 120 disposed above the first heat exchange pipe 110 through the second blister 150. Also, when the heat-exchanger fluid delivered after passing through all of the second heat exchange pipes 120 is discharged through the last second heat exchange pipe 120, the heat-exchanger fluid may be delivered to the third heat exchange pipe 130 disposed above the second heat exchange pipe 120 through the second blister 150. For convenience of description, a blister which connects each of the heat exchange pipes on each different layer is defined as the second blister 150. Referring to FIG. 2, the second blister 150 at the right side connects the first heat exchange pipe 110 with the second heat exchange pipe 120 and the second blister 150 at the left side connects the second heat exchange pipe 120 with the third heat exchange pipe 130. The form of the second blisters 150 is not limited to that of in FIGS. 1 through 4 described above, however, may vary if the heat-exchanger fluid may move as described below with reference to FIGS. 5 and 6.

The third blisters 160 may each be formed on the outer side surface of the second side part 102 and may connect each neighboring second heat exchange pipe 120 or each neighboring third second heat exchange pipe 130. That is, a path of moving the heat-exchanger fluid in the second heat exchange pipes 120 is connected to an inside space of the third blister 160 so that the heat-exchanger fluid may move to the neighboring second heat exchange pipe 120 through the third blister 160. Also, a path of moving the heat-exchanger fluid in the third heat exchange pipes 130 is connected to an inside space of the third blister 160 so that the heat-exchanger fluid may move to the neighboring third heat exchange pipe 130 through the third blister 160. For convenience of description, a blister which connects each of the second heat exchange pipes 120 on the same layer or each of the third heat exchange pipes 130 on the same layer is defined as the third blister 160. Referring to FIG. 3, the third blister 160 in the center connects each neighboring second heat exchange pipe 120 and the third blister 160 at the upper side connects each neighboring third heat exchange pipe 130. The form of the third blisters 160 is not limited to that of in FIGS. 1 through 4 described above, however, may vary if the heat-exchanger fluid may move as described below with reference to FIGS. 5 and 6

The inlet 180 is connected with the first heat exchange pipe 110 disposed on one side from among the first heat exchange pipes 110 (for example, the first heat exchange pipe 110 disposed at the far left in FIG. 1) and deliver the heat-exchanger fluid flowed from the outside to the first heat exchange pipe 110. Also, the outlet 190 is connected with the third heat exchange pipe 130 disposed on the other side from among the third heat exchange pipes 130 (for example, the third heat exchange pipe 130 disposed at the far right in FIG. 1) and discharges the heat-exchanger fluid delivered through the third heat exchange pipes 130. The positions of the inlet 180 and the outlet 190 may vary according to the positions of the heat exchange pipes and are not limited to that of described above with reference to FIGS. 1 through 4.

The heat exchanger 100 described above may be formed of a stainless steel. Also, the first heat exchange pipes 110, the second heat exchange pipes 120, the third heat exchange pipes 130, the first blisters 140, the second blisters 150, and the third blisters 160 may be combined to the first side part 101 and the second side part 102 by using brazing and thus the heat exchanger 100 according to an embodiment of the present invention may not be twisted or thermally deformed due to thermal stress.

FIGS. 5 and 6 illustrate a moving path of a heat-exchanger fluid in the heat exchanger 100 of FIG. 1.

Referring to FIGS. 1 through 6, the heat-exchanger fluid flowed through the inlet 180 is delivered through the first heat exchange pipe 110 which are connected to the inlet 180 as shown in ① and is delivered to the neighboring first heat exchange pipe 110 through the first blister 140 formed on the second side part 102 as shown in ②. Then, the heat-exchanger fluid move again toward the first side part 101 through the first heat exchange pipe 110 and is delivered to the neighboring first heat exchange pipe 110 through the first blister 140 formed on the first side part 101 as shown in ③. As described above, the heat-exchanger fluid move between the first side part 101 and the second side part 102 and thereby, move all of the first heat exchange pipes 110 and the first blisters 140. Such paths are illustrated in ④ through ⑧.

The heat-exchanger fluid delivered through the last first heat exchange pipe 110 move to the second exchange pipe 120 through the second blister 150 on the first side part 101 and move toward the second side part 102 from the first side part 101 through the second exchange pipe 120 as shown in ⑨. In addition, as shown in ⑩, the heat-exchanger fluid is delivered to another second exchange pipe 120 through the third blister 160 formed on the second side part 102 and move toward the first side part 101 from the second side part 102. As shown in ⑪, the heat-exchanger fluid delivered toward the first side part 101 through the second exchange pipe 120 moves to the third heat exchange pipe 130 through the second blister 150 formed on the first side part 101 and move toward the second side part 102 from the first side part 101 through the third heat exchange pipe 130. Then, as shown in ⑫, the heat-exchanger fluid is delivered to the heat exchange pipe 130 through the third blister 160 formed on the second side part 102 and move toward the first side part 101 from the second side part 102. Such delivered heat-exchanger fluid is delivered to the outlet 190 through a blister 170 formed on the first side part 101 and is discharged to the outside through the outlet 190 as shown in ⑬. For example, when a burner (not illustrated) is installed on the upper part of the heat exchanger 100 and flames and combustion gas at a high temperature generated from the burner pass from the upper part to the lower part of the heat exchanger 100, the heat-exchanger fluid absorbs heat generated from the flames and combustion gas at a high temperature while being delivered from the inlet 180 and the outlet 190 and thereby, the heat-exchanger fluid at a high temperature may be discharged through the outlet 190.

The heat exchanger according to an embodiment of the present invention has a blister-form and absorbs heat on a surface thereof, thereby maximizing efficiency of the heat exchanger. In addition, the heat exchanger according to an embodiment of the present invention is formed of a stainless steel, thereby showing excellent corrosion resistance. Also, the parts therein are combined to each other by using brazing and thus, the heat exchanger may not be twisted or thermally deformed due to thermal stress.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A heat exchanger comprising:
a plurality first through third heat exchange pipes connected between a first side part and a second side part, each of which comprising a path of moving heat-exchanger fluid inside;
first blisters formed on the outer side surfaces of the first side part and the second side part, thereby connecting gaps between each neighboring first heat exchange pipe;
second blisters formed on the outer side surface of the first side part, thereby connecting the first heat exchange pipes with the second heat exchange pipes or the second heat exchange pipes with the third second heat exchange pipes; and
third blisters formed on the outer side surface of the second side part, thereby connecting neighboring second heat exchange pipes or neighboring third heat exchange pipes,
wherein the second heat exchange pipes are spaced apart from the first heat exchange pipes and formed above the first heat exchange pipes and the third heat exchange pipes are spaced apart from the second heat exchange pipes and formed above the second heat exchange pipes.

2. The heat exchanger of claim 1, wherein the second heat exchange pipes are each formed above the first heat exchange pipes disposed at both end sides from among the first heat exchange pipes and the third heat exchange pipes are formed above the second heat exchange pipes.

3. The heat exchanger of claim 1, wherein the heat-exchanger fluid is flowed to the first heat exchange pipe disposed on one side from among the first heat exchange pipes through an inlet connected to the first side part and the heat-exchanger fluid delivered to the third heat exchange pipe disposed on the other side from among the third heat exchange pipes is discharged to an outlet connected to the first side part through a fourth blister.
